Europäisches Patentamt

**European Patent Office**

**Office européen des brevets**

(11) Publication number:

**0 183 357**

**A2**

## (12) EUROPEAN PATENT APPLICATION

(21) Application number: **85307133.0**

(22) Date of filing: **04.10.85**

(51) Int. Cl.⁴: **G 02 B 6/38**

(30) Priority: **26.10.84 GB 8427178**

(43) Date of publication of application:
**04.06.86 Bulletin 86/23**

(84) Designated Contracting States:
**AT BE CH DE FR IT LI LU NL SE**

(71) Applicant: **STC plc**
**190 Strand**
**London, WC2R 1DU(GB)**

(72) Inventor: **Adams, Graham Leonard**
**19 Homestead Paddock**
**London, N14 4AN(GB)**

(74) Representative: **Capsey, Sydney Ross**
**Standard Telephones and Cables Patent Department**
**Edinburgh Way**
**Harlow Essex CM20 2SH(GB)**

(54) Optical fibre connector.

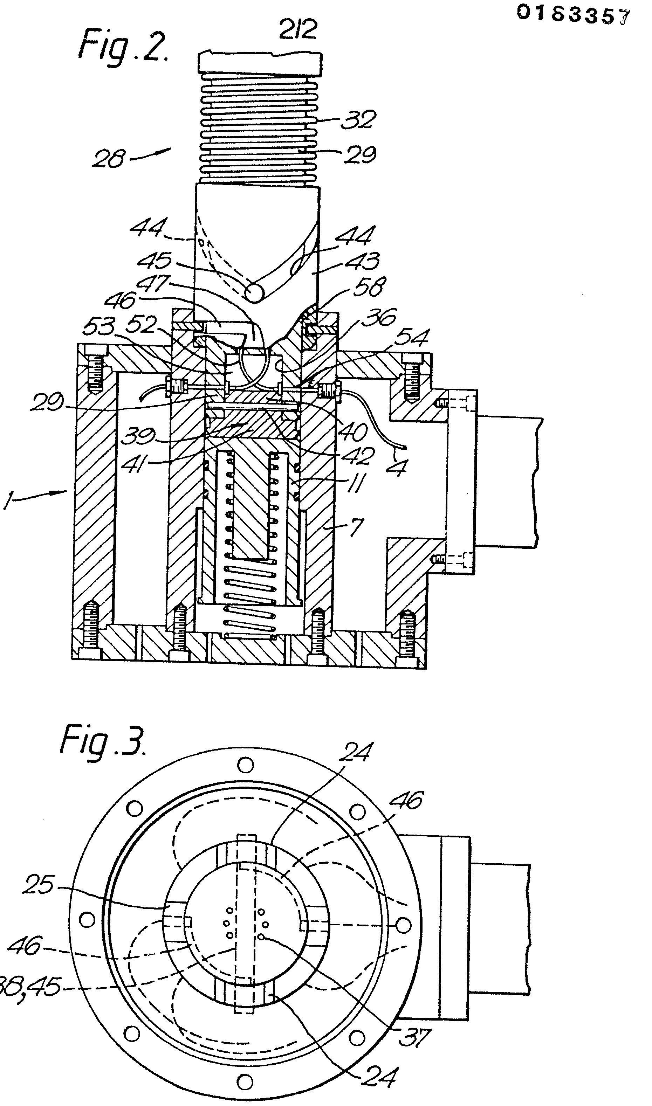

(57) A male connector elements (28) has a path (35,37) for an optical fibre (52) which extends axially for most of the length of the element but ends in a radial termination (54). A female connector element (1) has a cylindrical member with radial termination (8) of an optical fibre (4) which is to be connected to fibre (52). Termination 54 is covered by a sleeve (43) and termination 8 is covered by a piston (11) when the elements are disconnected. The act of connection causes automatic uncovering and alignment (Fig. 2) of the terminations (8,54); ring seals carried by the sleeve and piston effecting wiping of the termination lenses during the uncovering.

# OPTICAL FIBRE CONNECTOR

This invention relates to optical fibre connectors and, in particular but not exclusively, to optical fibre connectors for underwater use.

Whereas the offshore oil industry presently employs oil rig platforms from which the operation of underwater elements, valves etc., is controlled, it is proposed that in future many such operations will be controlled remotely from the land. In view of the intrinsic safety requirements in force in the oil industry, the use of optical fibre systems is particularly applicable for such remote operation. In the case of valve actuation, this is usually done electrically using a very small amount of electrical power to actuate a pilot valve which then diverts hydraulic power to operate a larger valve. Our co-pending G.B. Application No. 8331952 (Serial No.      ) (G.D. Pitt et al 47-13-4-2) describes various optical actuators which may be used to actuate such pilot valves, or other devices, rather than doing this electrically.

It is a requirement of such remote control systems that the connection of the optical fibre cables to the devices located under the water can be made underwater and that the cable can be subsequently disconnected under the water.

According to the present invention there is provided an optical fibre connector comprising a male connector element and a female connector element, wherein the male connector element has a longitudinal axis and is inserted into the female connector element upon relative movement therebetween in the direction of said axis, optical path connection between the connector elements being transverse to said axis, an optical fibre path in the male connector element terminating radially with respect thereto.

An embodiment of the invention will now be described with reference to the accompanying drawings, in which:-

Fig. 1 shows, partially in cross-section, an optical fibre cable input connection and an underwater-anchored element prior to interconnection thereof, and Fig. 1a shows a portion of Fig. 1 on an enlarged scale;

Fig. 2 shows, mainly in cross-section, a completed optical connection between the optical fibre cable and the underwater-anchored element, and

Fig. 3 illustrates in a plan view optical fibre paths in the underwater-anchored element and elements of the input connection.

A particular requirement of underwater optical fibre connectors is that lenses disposed at the ends of the optical fibres, and via which the optical connection actually takes place, should be protected in some manner when the connector elements are not connected to prevent damage thereto. When the connector elements are however connected underwater, the protection must be removed or at least displaced. Similarly, when the connector elements are disconnected underwater the protection must be replaced. Thus it is desirable that the protection is automatically moved upon the acts of connection and disconnection. Additionally the connector elements are required to be connectable and disconnectable in a simple manner to facilitate reliably performing these operations underwater. Furthermore, it is desirable that the lenses be cleaned prior to connection, preferably automatically.

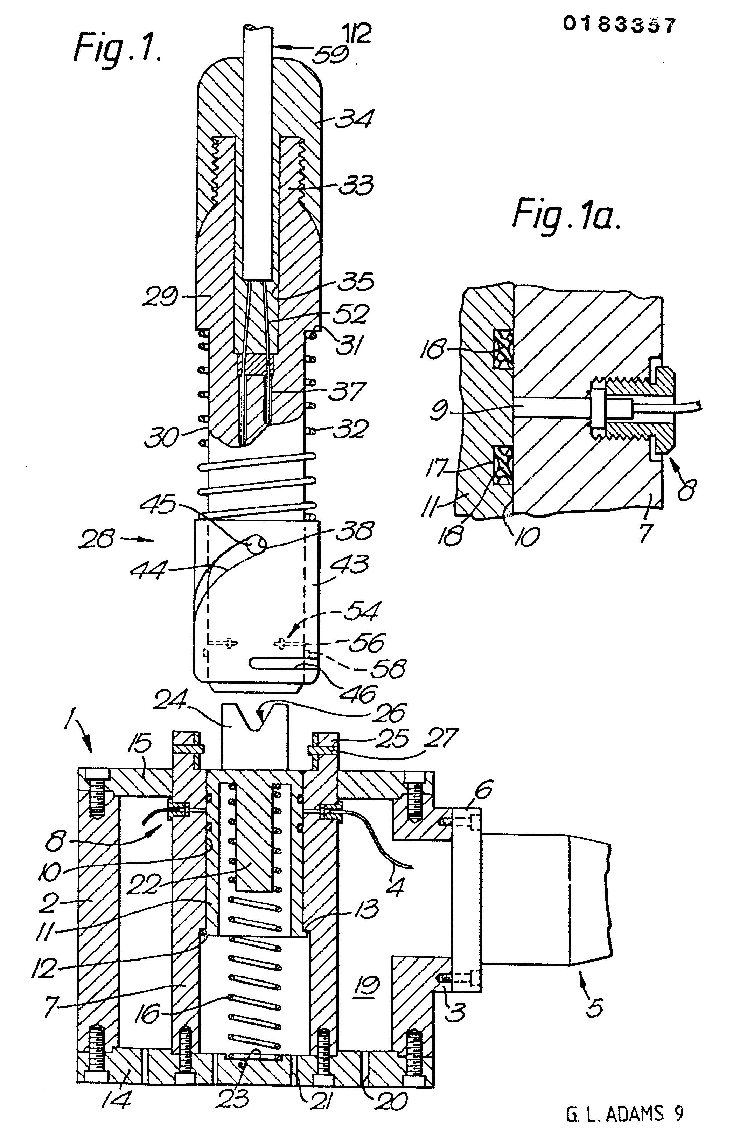

Referring to Figs 1 and 1a the underwater-anchored connector element 1 will be described first. The connector element 1 comprises a hollow cylindrical body member 2 having a port 3 through which six in the particular embodiment being described of which only two are visible in Fig. 1, optical fibres 4 extend into an output connection 5, as illustrated in Fig. 1, which includes a flange 6 via which it is bolted to the body member 2. The output connection may comprise a member projecting from an element to be operated, for example a valve, alternatively it may comprise a fibre optic cable which leads to a number of elements to be operated. Arranged generally coaxially with the body member 2 is a cylinder member 7. Each of the optical fibres 4 has an expanded beam termination 8 at one end and is secured in a respective radial bore in the cylinder 7 with the external lens face 9 of the termination disposed at the inner cylindrical surface 10 of the cylinder member 7 (Fig. 1a). Inside the cylinder member 7 is slidably disposed a piston 11 which has a flange 12. The surface 10 is twice stepped and at one step provides a stop 13 against which the piston flange 12 abuts in the fully extended position of the piston 11 illustrated in Fig. 1. To the lower (in Fig. 1) end of the cylinder member 7 is bolted an end plate 14. The cylinder member/end plate assembly is secured to the lower (in Fig. 1) end of the body member 2. A centrally-apertured end plate 15 is secured to the upper end of the body member 2, a portion of the cylinder member projecting through the central aperture. A coiled spring 16 is disposed in the cylinder member 7 and serves to urge the piston 11 upwards into the position illustrated with its flange abutting the stop 13. The piston 11 has two circumferential grooves 17 in each of which is disposed a ring seal 18 which seals serve to protect the lens faces 9 and also to clean them by a wiping action when the two connector elements are joined, as will be further described in the following. The optical fibres 4 extend in the cavity 19 between the cylinder member 7 and the body member from the termination 8 to the output connection 5. The dimensions of the cavity 19 are such that the curvature of the optical fibres does not exceed the minimum bend radius. The cavity 19 is filled with a material such as silicone gel. Bores 20 in the end plate 14 allow for pressure equalisation however due to the nature of the silicone gel it will not drain from the cavity. Bores 21 in the end plate 14 mean that sea water can enter the cylinder member 7 and will be displaced therefrom upon movement of the piston 11 during connection of the connector elements. The piston 11 includes a central spring locating portion 22, the opposite end of the spring being located in a locating recess 23 in the end plate 14.

The portion of the cylinder member 7 projecting through the central aperture of the end plate 15 is comprised of four elements, a pair of diametrically opposed members 24 and a pair of diametrically opposed members 25. The members 24 are axially longer than the members 25 and each has a V-sectioned slot 26 which provide radial and height location during connection of two connector elements, as will be described hereinafter. The members 25 have radial bores in which are secured locating pins 27 which project towards one another. See also Fig. 3.

The connector element 1 comprises a female element whereas the other connector element 28 comprises a male element which can be connected to or disconnected from the element 1 underwater.

The connector element 28 comprises a body element 29 whose lowermost portion (in Fig. 1) has a cylindrical outer surface 30 whereas its uppermost portion is shaped so as to provide an abutment shoulder 31 for a spring 32 and anchoring means 33 for an overmoulding 34. Through the uppermost portion of body element 29 and partway into the lowermost portion extends a single axial bore 35, which may be stepped as shown. An axial bore 36 (Fig. 2) extends partway into the lowermost portion from the lower end. The bores 35 and 36 are interconnected by six, in the case of a six fibre connector, bores 37 which are disposed on the periphery of a circle as indicated in Fig. 3, they are, however, not equispaced due to the provision of a cross bore 38 through the lowermost portion of body element 29 with which they do not communicate. The axial bore 36 is partially closed by means of an end piece 39 (Fig. 2) having a spigot portion 40 which projects into bore 36 and a collar portion 41 which abuts the lowermost end of the body element 29. The end piece 39 is secured to the body element 29 by means of a pin 42 extending through radial bores therein as indicated.

Slidably disposed on the cylindrical outer surface 30 of body element 29 is a sleeve member 43 which has two part-helical slots 44 of opposite inclination. A pin 45 extends through the cross bore 38 and each end thereof is located in a respective one of the part-helical slots 44. The spring 32 is disposed between the sleeve member 43 and the shoulder 31 and in the unconnected state of the connector elements 1 and 28 urges the sleeve member 43 to the fully extended position shown in Fig. 1 with the uppermost end of the slots 44 engaging the pin 45. The sleeve member has a two oppositely disposed external part circumferential grooves 46, see also Fig.3, which have communicating axial entry grooves 47, see Fig. 2. The pins 27 are arranged in the grooves 46 in the connected state of the connector elements. Six optical fibres 52 extend to the cavity 53 defined between body element 29 and end piece 39 via the bores 37. Each of the fibres 52 has a respective expanded beam termination 54 at one end and is secured in a respective radial bore in the body portion 29 with the external lens face 56 of the termination disposed at the cylindrical outer surface 30. The sleeve member 43 has an internal circumferential groove in which is disposed a ring seal 58 which serves to clean the lens faces 56 by a wiping action when the two connector elements are joined, as will be further described hereinafter. In the unconnected state of the connector element 28 the ring seal 58 is disposed below the lens faces 55 as is apparent from Fig.1. The ring seals 18 and 58 have a generally X-shaped cross-section as shown in Fig. 1a.

To assemble the connector element 28 the end of a cable 59 including fibres 52 is prepared so that a length of the fibres 52 protrudes from the end of the cable sheath. The cable end is inserted in the bore 35 of body element 29 so that each of the fibres 52 extends in a respective one of bores 37 and out of bore 36 at the lower end of the body element 29. An expanded beam termination 54 is fitted to each fibre end and then secured in its respective radial bore. The cable end is secured to the uppermost end of body element 29 by the overmoulding 34. The cavity 53 is filled with silicone gel and the end piece 39 is inserted in bore 36 and secured by means of pin 42. The spring 32 is located on outer surface 30, together with the sleeve member 43 which is then secured to body member 29 by pin 45 extending through cross bore 38 and slots 44. Pin 45 is maintained in this position relative to body member 29 and sleeve member 43 for example by a grab screw.

For connection of the anchored connector element 1 and the connector element 28 mounted to the end of cable 59 the connector element 28 is axially aligned with the cylinder member 7, with the entry grooves 47 of sleeve member 43 aligned with pins 27, and pushed downwards. When contact is made between the end piece 39 and the piston 11, the body element 29 and end piece 39 move into bore of the cylinder member 7 pushing the piston 11 downwards against the face of the spring 16. In the case of this movement of the piston 11 the lens faces 9 are wiped by the uppermost ring seal 18. At the same time the sleeve member 43 rides up the outer surface 30 of body member 29 wiping the lens faces 6 with the ring seal 58 as it does so. The part-helical grooves 44 cause the sleeve member 43 to be rotated during the insertion of the connector element 28 into connector element 1 with each pin 27 disposed in the respective part-circumferential grooves 46 and thus locking the connector elements 1 and 28 together. The various elements are dimensioned such that when locking is achieved and the pins 27 are at the closed ends of the grooves 46 the ends of the pin 45 are located in the grooves of members 24 and at the lower end of the part-helical slots 44 then the lens faces 9 and 56 are aligned (see Fig. 3). The springs 16 and 32 are compressed in the connected state and thus serve to maintain the elements in the connected state.

For disconnection of the connected elements 1 and 28 the sleeve member is rotated to realign the entry grooves with the pins 27, this rotation simultaneously causing the body member 29 to be pulled out of the cylinder member 7 and back into sleeve member 43 by virtue of the action of the pin 45 and slots 44 and of the spring 32. The lens faces 56 are reprotected by the ring seal 58 before actual disconnection of the elements 1 and 28 occurs. The lens faces 9 are also reprotected by the ring seals 18 before actual disconnection occurs due to in part to the force of the spring 16 pushing the piston 11 upwards. Due to the presence of a trapped volume between the piston 11 and the connector element 28

0183357

within the cylinder member 7, the piston 11 will also be subject to forces tending to draw it upwards and augmenting the force of spring 16 during disconnection. Thus connection of the connector elements 1 and 28 merely requires alignment of the two elements and pushing of element 28 into element 1, the sleeve 43 not being held for this operation, whereas disconnection merely requires rotation of the sleeve 43 for unlocking the connector body 29 not being held for this operation, followed by withdrawal of connector element 1. The connector may be termed a radial connector since the generally axial, with respect to the cable 59, optical fibres extend in a radial direction for the actual optical connection, that is at the lower end of the body member 29. This radial configuration means that the lenses can be wiped automatically by the relative axial movement between the connector elements.

CLAIMS:-

1. An optical fibre connector comprising a male connector element and a female connector element, characterised in that the male connector element (28) has a longitudinal axis and is inserted into the female connector element (1) upon relative movement therebetween in the direction of said axis, optical path connection between the connector elements (28,1) being transverse to said axis, an optical fibre path in the male connector element (28) terminating radially with respect thereto.

2. An optical fibre connector as claimed in claim 1, characterised in that said optical fibre path in the male connector element (28) extends substantially in parallel to the longitudinal axis towards one end of the element where it terminates in a radial bore, in that the female connector element (1) includes a hollow cylindrical member (7) adapted to receive the male connector element (28), and in that an optical fibre path in the female connector element includes a radial bore in the hollow cylindrical member (7) which is aligned with the radial bore of the male connector element when the connector elements are connected.

3. An optical fibre connector as claimed in claim 2 characterised in that when the connector elements (28,1) are disconnected the radial bores are covered.

4. An optical fibre connector as claimed in claim 3 characterised in that for covering the radial bore in the male connector element (28) a sleeve element (43) is slidably disposed on the male connector element (28) and acted upon by first resilient means (32) in the direction to cover the radial bore.

5. An optical fibre connector as claimed in claim 3 or claim 4 characterised in that for covering the radial bore in the female connector element (1) a piston (11) is slidably disposed in the hollow cylindrical member (7) and acted upon by second resilient means (16) in the

- 10 -                      0183357

direction to cover the radial bore.

6.      An optical fibre connector as claimed in claim 5 as appendant to claim 5 characterised in that when the connector elements (28,1) are connected the sleeve element (34) and the piston (11) are automatically displaced and the uncovered radial bores aligned.

7.      An optical fibre connector as claimed in any one of claims 4 to 6, characterised in that in use thereof optical fibres (52,4) to be connected are terminated by expanded beam terminations (54,8) disposed in the radial bores, and in that lenses of the terminations are automatically wiped, when the connector elements are connected, by wiper seal elements (58,18) carried by the sleeve element (43) or piston (11), respectively.

8.      An optical fibre connector as claimed in any one of claims 4 to 7, characterised in that the male connector element (28) includes an elongate body portion (29) and wherein the sleeve element (43) is displaceable helically with respect thereto.

9.      An optical fibre connector as claimed in claim 8 characterised in that the sleeve element (43) includes two opposed part helical grooves (44) in each of which is engaged a respective end of a pin (45) secured to the body portion (29) transversely of its longitudinal axis, in that the hollow cylindrical member (7) includes means (24,26) for locating the pin (45) secured to the body portion at a predetermined position when the male and female elements are connected together whereby the radial bores are accurately aligned, and in that the sleeve element (43) includes a part circumferential groove (46) for engagement with a pin (27) projecting from the hollow cylindrical member (7) and locking together of the male and female connector elements (28,1).

10.      An optical fibre connector as claimed in claim 8 as appendant to claim 6 characterised in that when the connector elements (28,1) are being connected the elongate body portion (29) contacts the piston (11) and displaces it within the hollow cylindrical member (7), there being a trapped volume in the hollow cylindrical member (17) and adjacent the point of contact between the piston (11) and the elongate body portion (29) which during disconnection of the connector elements (28,1) serves to draw the piston (11) back to its disconnected position and augments the effect of the respective resilient means (16).

Fig.1.

0183357

Fig.1a.

G. L. ADAMS 9

Fig.2.

0183357

Fig.3.

G. L. ADAMS 9